(19) Europäisches Patentamt

European Patent Office

Office européen des brevets

(11) **EP 4 628 614 A1**

(12) **EUROPEAN PATENT APPLICATION**
published in accordance with Art. 153(4) EPC

(43) Date of publication:
**08.10.2025 Bulletin 2025/41**

(21) Application number: **23898269.8**

(22) Date of filing: **28.11.2023**

(51) International Patent Classification (IPC):
*C22C 38/04* (2006.01)    *C22C 38/02* (2006.01)
*C22C 38/00* (2006.01)    *C22C 38/06* (2006.01)
*C22C 38/38* (2006.01)    *C22C 38/22* (2006.01)
*C22C 38/26* (2006.01)    *C22C 38/28* (2006.01)
*C21D 8/02* (2006.01)    *B21C 47/02* (2006.01)

(52) Cooperative Patent Classification (CPC):
**B21C 47/02; C21D 8/02; C22C 38/00; C22C 38/02;
C22C 38/04; C22C 38/06; C22C 38/22;
C22C 38/26; C22C 38/28; C22C 38/38**

(86) International application number:
**PCT/KR2023/019353**

(87) International publication number:
**WO 2024/117743 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.11.2022 KR 20220162430
23.11.2023 KR 20230164614**

(71) Applicant: **POSCO Co., Ltd
Pohang-si, Gyeongsangbuk-do 37859 (KR)**

(72) Inventors:
• **HAN, Sang-Ho**
**Gwangyang-si, Jeollanam-do 57807 (KR)**
• **KONG, Jong-Pan**
**Gwangyang-si, Jeollanam-do 57807 (KR)**
• **KIM, Eun-Young**
**Gwangyang-si, Jeollanam-do 57807 (KR)**
• **BANG, Chan-Woo**
**Gwangyang-si, Jeollanam-do 57807 (KR)**

(74) Representative: **Meissner Bolte Partnerschaft
mbB
Patentanwälte Rechtsanwälte
Postfach 86 06 24
81633 München (DE)**

(54) **ULTRA-HIGH STRENGTH STEEL SHEET HAVING EXCELLENT HOLE EXPANSION RATIO,
AND METHOD FOR MANUFACTURING SAME**

(57)    The present invention pertains to a steel sheet used in automobiles etc. and, more specifically, to an ultra-high strength steel sheet having an excellent hole expansion ratio, and a method for manufacturing same.

EP 4 628 614 A1

**Description**

Technical Field

The present disclosure relates to an automotive steel sheet used in automobiles, or the like, and more specifically, to an ultra-high strength cold- rolled steel sheet (and a plated steel sheet) having an excellent hole expansion ratio, thus having excellent formability when processing parts, and excellent crashworthiness during a collision, and a method for manufacturing the same.

Background Art

Recently, the demand for a high strength steel sheet used in automotive frame parts is gradually increasing. In addition, an ultra-high strength steel sheet with a tensile strength exceeding 1500 MPa is being applied to some parts.
In order to obtain such ultra-high strength, it is effective to have a steel structure mainly comprised of a hard structure such as martensite or bainite. However, such a steel structure has lower elongation than a composite structural steel of ferrite and martensite, and is limited to parts formed by bending with a relatively simple shape, due to the occurrence of cracks during forming.
In order to improve the strength of a steel sheet, the composition of the hardened structure is necessary, but the application thereof as a smooth automotive part has been limited due to the occurrence of cracks during part forming and the deterioration in impact properties during a collision. Therefore, in order to achieve high strength in automotive parts with a steel structure mainly comprised of martensite, in addition to securing the desired strength, by developing a steel material having more excellent hole expansion ratio and fatigue properties, it can be widely applied as a high-strength steel material for automotive parts only when it secures crashworthiness in the event of a vehicle collision.
Meanwhile, there is provided a HPF steel as a material with better part forming and collision properties. A Hot Press Forming (HPF) forming technique which forms a material at high temperatures and then press-forms the material in a hot-rolled state to secure required strength through water cooling between a die and the material. Therefore, not only can it secure high strength for the same thickness, but it is also excellent in terms of formability, so it is widely used. However, since there are problems in terms of application due to excessive facility investment costs and increased process costs, research on the development of a material for cold stamping having a tensile strength of 1500MPa or more is actively being conducted recently.
In Patent Document 1 (Japanese Publication No. 2009-062894), a patent for securing strength by adding hardenable elements such as C, Mn, or the like to secure strength and then securing a martensite phase at room temperature through water cooling after normal annealing, and in patents in Patent Document 2 (Japanese Application No. 2013-048343), patens for securing high-strength steel by optimizing cooling conditions during cooling, basically, since the strength is secured by using a martensite phase, it cannot overcome limitations such as a limitation in formability and limitations in excellent crashworthiness and fatigue properties.

(Patent Document 1) Japanese Application No. 2009-062894
(Patent Document 2) Japanese Application No. 2013-048343

Summary of Invention

Technical Problem

An aspect of the present disclosure is to overcome the limitations of the above-descrived conventional techniques, and to provide a steel sheet having an ultra-high strength of 1500 MPa, excellent hole expansion ratio and fatigue properties, by optimizing the steel composition and manufacturing process.
An object of the present disclosure is not limited to the above description. The object of the present disclosure will be understood from the entire content of the present specification, and a person skilled in the art to which the present disclosure pertains will understand an additional object of the present disclosure without difficulty.

Solution to Problem

According to an aspect of the present disclosure, provided is a steel sheet,
**[0010]** the steel sheet including by weight%: 0.1 to 0.3% of carbon (C), 0.5% or less (excluding 0%) of silicon (Si), 1.0 to 3.0% of manganese (Mn), 0.0005 to 0.003% of boron (B), 0.01% or less (excluding 0%) of phosphorus (P), 0.01% or less (excluding 0%) of sulfur (S), 0.01% or less (excluding 0%) of nitrogen (N), 0.01 to 0.1% of aluminum (Al), with a remainder of Fe and other inevitable impurities,

wherein an average area fraction of cementite precipitates present in at least one grain boundary selected from the group consisting of ferrite and bainite within 10 μm from a surface thereof is 60% or less (excluding 0%), compared to an area of cementite precipitates present in the grain boundary of martensite at a point 1/4t from the surface, where t is a total thickness of the steel sheet.

According to another aspect of the present disclosure, provided is a method for manufacturing a steel sheet,

the method for manufacturing a steel sheet including operations of: reheating a steel slab including by weight %, 0.1 to 0.3% of carbon (C), 0.5% or less (excluding 0%) of silicon (Si), 1.0 to 3.0% of manganese (Mn), 0.0005 to 0.003% of boron (B), 0.01% or less (excluding 0%) of phosphorus (P), 0.01% or less (excluding 0%) of sulfur (S), 0.01% or less (excluding 0%) of nitrogen (N), 0.01 to 0.1% of aluminum (Al), with a remainder of Fe and other inevitable impurities, at a temperature within a range of 1100 to 1300°C;
hot rolling the reheated slab to manufacture a hot-rolled steel sheet;
coiling the hot-rolled steel sheet at a temperature within a range of 400 to 600°C;
cold rolling the coiled hot-rolled steel sheet at a reduction ratio of 30 to 80%;
annealing the cold-rolled steel sheet by heat treatment at a temperature within a range of Ac3+10°C to Ac3+80°C, wherein in the annealing operation, a dew point temperature is controlled to be -40°C or lower at a temperature of Ac3+10°C or lower, and a dew point temperature is controlled to be from -30°C to +30°C at a temperature within a range of Ac3+10°C to Ac3+80°C.

Advantageous Effects of Invention

According to the present disclosure, a steel sheet to overcome the limitations in conventional techniques and having ultra-high strength with a tensile strength of 1500 MPa or more having excellent hole expansion ratio and fatigue properties, may be provided.

The various and beneficial merits and effects of the present disclosure are not limited to the descriptions above, and may be more easily understood in a process of describing specific exemplary embodiments in the present disclosure.

Best Mode for Invention

Terms used in the present specification are for explaining specific exemplary embodiments rather than limiting the present disclosure. In addition, a singular form used in the present specification includes a plural form also, unless the relevant definition has a clearly opposite meaning thereto.

The meaning of "comprising" used in the specification is to embody the configuration and is not to exclude the presence or addition of other configurations.

Unless otherwise defined, all terms including technical terms and scientific terms used in the present specification have the same meaning as would be commonly understood by a person with ordinary skill in the art to which the present disclosure pertains. Pre-defined terms are interpreted as being consistent with the relevant technical literature and the disclosure herein.

Therefore, in the related art, high-strength steel was secured by adding hardenable elements such as C, Mn, or the like to secure strength, and then securing a martensite phase at room temperature through water cooling after normal annealing, or optimizing cooling conditions during cooling. However, since the strength is basically secured by using the martensite phase, it cannot overcome limitations such as a limitation in formability and limitations in excellent crashworthiness and fatigue properties.

The present inventors have conducted extensive research to solve the problems described above in the prior art, and as a result, have confirmed that target properties may be secured when the components and annealing operation conditions satisfy specific relationships, thereby completing the present disclosure.

Accordingly, in the present disclosure, to manufacture an ultra-high strength cold-rolled steel sheet (and a plated steel sheet) having a tensile strength of 1500MPa or more, by optimizing components and operating conditions, and in particular, developing an operating technology that can change phase structures in a surface layer portion and a central portion of the steel sheet, and applying the same to the field, a steel sheet having better superior properties may be manufactured, and thus the present disclosure is proposed.

Hereinafter, the present disclosure will be described in detail. First, an embodiment of a steel sheet according to the present disclosure will be described in detail.

An alloy composition of a steel sheet of the present disclosure includes, by weight %, 0.1 to 0.3% of carbon (C), 0.5% or less (excluding 0%) of silicon (Si), 1.0 to 3.0% of manganese (Mn), 0.0005 to 0.003% of boron (B), 0.01% or less (excluding 0%) of phosphorus (P), 0.01% or less (excluding 0%) of sulfur (S), 0.01% or less (excluding 0%) of nitrogen (N), 0.01 to 0.1% of aluminum (Al), with a remainder of Fe and other inevitable impurities. In the present disclosure, a content of each element is based on weight %, unless otherwise specified.

Carbon (C): 0.1 to 0.3%

Carbon (C) is required to obtain a steel structure having a martensite area fraction of 95% or more at 1/4 of a plate thickness by improving hardenability. In addition, carbon (C) is necessary from the perspective of securing TS $\geq$ 15000MPa, by increasing a martensite strength. When a content of C is less than 0.1%, a predetermined strength may not be obtained. Therefore, the content of C is set to be 0.1% or more, and a more preferable content of C may be 0.15% or more. Meanwhile, when the content of C exceeds 0.3%, it becomes difficult to obtain good weldability or delayed fracture resistance properties. Therefore, the content of C is set to be 0.30% or less, and more preferably, a lower limit of the content of C may be 0.25% or less. Meanwhile, the content of C may be 0.10 to 0.30%.

Silicon (Si): 0.5% or less (excluding 0%)

Silicon (Si) is a reinforcing element through solid solution strengthening, and is also contained from the perspective of improving bendability by suppressing the formation of carbides on a film during tempering at high temperatures. From the perspective of obtaining the above-described effects, a higher content of Si is advantageous, but when the Si addition exceeds a certain standard content thereof, the weldability and Liquid Metal Embrittlement (LME) properties are inferior, so an upper limit of the content of Si is set to be 0.5% or less, and the preferable range of the content of Si is set to be 0.32% or less. However, a lower limit of the content of Si is not specifically limited, and 0% is excluded because Si is added as an impurity element in the manufacturing process. Meanwhile, a more preferable lower limit of the content of Si may be 0.001% or more. Meanwhile, the content of Si may be 0.500% or less.

Manganese (Mn): 1.0 to 3.0%

Manganese (Mn) contributes to the improvement of strength by increasing a martensite area fraction through increased hardenability and by solid solution strengthening. In addition, Mn is contained to reduce hot brittleness by fixing S in steel as MnS. When a lower limit of a content of Mn is less than 1.0%, the possibility of formation of ferrite and bainite is higher than that of martensite during cooling, so a lower limit of the content of Mn is limited to 1.0% or more, and a more preferable lower limit of the content of Mn is 1.3% or more. Meanwhile, the content of Mn is set to be 3.0% or less from the perspective of welding stability. Meanwhile, the content of Mn is preferably 2.6% or less, and more preferably 2.0% or less.

Boron (B): 0.0005 to 0.003%

Boron (B) is an element suppressing the formation of ferrite, and accordingly, in the present disclosure, B has the advantage of suppressing the formation of ferrite during cooling after annealing. However, when a content of B exceeds 0.003%, ductility may be significantly reduced. On the other hand, when the content of B is less than 0.0005%, there is no hardening effect at all, so that the target strength may not be secured, and ferrite may be formed on a surface layer, which tends to result in poor bendability, and thus the content of B is set to be 0.0005 to 0.003%. Meanwhile, it is more preferable that the content of B be in the range of 0.002% or less. Meanwhile, the content of B may be 0.0005 to 0.0030%.

Phosphorus (P): 0.01% or less (excluding 0%)

Phosphorus (P) is an impurity element contained in steel. The lower an amount of phosphorus (P) added to steel, the more advantageous it is, but considering the case in which P is inevitably incorporated during the manufacturing process, 0% is excluded from the content of P. However, when the content of P exceeds 0.01%, weldability may deteriorate and there may be a risk in that brittleness of steel occurs, so an upper limit of the content of P may be limited to 0.01% or less. A more preferable upper limit of the content of P may be 0.003% or less. Meanwhile, the content of P may be 0.010% or less.

Sulfur (S): 0.01% or less (excluding 0%)

Sulfur (S), like P, is an impurity which is inevitably included in steel, and is an element which impairs the ductility and weldability of a steel sheet, so it is preferable to control a content of S as low as possible. Therefore, in the present disclosure, it is preferable to limit the content of S to 0.01% or less. More preferably, the content of S may be limited to 0.005% or less. More preferably, it is preferable to control the content of S to 0.002% or less to minimize MnS precipitates in steel, thereby contributing to improving bendability. Meanwhile, considering the case in which S is inevitably included during the manufacturing process, 0% is excluded from the content of S. Meanwhile, the content of S may be 0.010% or less.

Nitrogen (N): 0.01% or less (excluding 0%)

Nitrogen (N) is an impurity element, and when a content of N exceeds 0.01%, it greatly increases the risk of cracks occurring during continuous casting due to the formation of AlN, or the like, so it is preferable to limit an upper limit of the content of N to 0.01%. The content of N is more preferably 0.008% or less, and most preferably 0.006% or less. Meanwhile, considering the case in which N is inevitably included during the manufacturing process, 0% is excluded from the content of N. Meanwhile, the content of N may be 0.010% or less.

Aluminum (Al): 0.01 to 0.1%

Aluminum (Al) may be added to remove oxygen in molten steel, and is an element which is effective in stabilizing retained austenite by suppressing precipitation of cementite during reheating and over-aging operations, similar to Si. When the content of Al is less than 0.01%, deoxidation of a steel material is insufficient, and cleanliness of the steel material is impaired. On the other hand, when the content of Al exceeds 0.1%, not only will castability of a slab deteriorate, but a temperature required for heating a single-phase region during annealing will also increase, which may cause production and facility problems. More preferably, an upper limit of the content of Al may be limited to 0.05% or less. Meanwhile, the content of Al may be 0.010 to 0.100%.

The remaining component of the present disclosure is iron (Fe). However, since in the common manufacturing process, unintended impurities may be inevitably incorporated from raw materials or the surrounding environment, the component may not be excluded. Since these impurities are known to any person skilled in the common manufacturing process, the entire contents thereof are not specifically mentioned in this specification.

The steel sheet may further include at least one selected from the group consisting of, by weight%: 0.2% or less (excluding 0%) of chromium (Cr), 0.01 to 0.1% of molybdenum (Mo), 0.01 to 0.05% of niobium (Nb), 0.01 to 0.05% of titanium (Ti), and 0.001 to 0.1% of antimony (Sb). Hereinafter, the reasons for adding each component and limiting the content are explained in detail.

Chromium (Cr): 0.2% or less (excluding 0%)

Chromium (Cr) may be added to obtain an effect of improving the quenchability of steel. However, since alloying elements have a higher cost than other hardenable elements, it is preferable to control a content of Cr as low as possible, so a lower limit of the content of Cr is not greatly limited, but 0% is excluded considering the level of impurities which may be inevitably incorporated. In addition, when the content of Cr exceeds 0.2%, a solidification speed of cementite during annealing is delayed, and the bendability deteriorates by remaining undissolved cementite. Therefore, the content of Cr is controlled to 0.2% or less, and an upper limit of the more preferable content of Cr may be 0.1% or less. Meanwhile, the content of Cr may be 0.200% or less.

Molybdenum (Mo): 0.01 to 0.1%

Molybdenum (Mo) has an effect of improving the quenchability of steel, generating fine carbides containing Mo which become hydrogen trap sites, and improving delayed fracture resistance properties by refining martensite. However, when the content of Mo exceeds 0.1%, the effect is not significant compared to an increase in costs due to the addition of expensive alloying elements, so it is preferable to set an upper limit of the content of Mo to 0.1% or less. Meanwhile, when the content of Mo is less than 0.01%, it was experimentally confirmed that the basic characteristics of Mo were not exhibited at all, and thus there was no delayed destruction improvement effect, and a lower limit of the content of Mo was set to be 0.01% or more. Meanwhile, in terms of further improving the above-described effect, it is more preferable that the upper limit of the content of Mo is 0.05%. Meanwhile, the content of Mo may be 0.010 to 0.100%.

Niobium (Nb): 0.01 to 0.05%

Niobium (Nb) is an element which segregates at austenite grain boundaries and contributes to strength increase through a precipitation strengthening effect by suppressing austenite grain growth during annealing heat treatment. However, when the content of Nb exceeds 0.05%, precipitation of carbides and nitrides increases, reducing the workability of a base material, and the cost increases as an alloy input becomes excessive. When the content of Nb is less than 0.01%, it does not contribute to the increase in strength at all, so a lower limit of the content of Nb is set to be 0.01%. Meanwhile, in terms of improving the above-described effect, the lower limit of the content of Nb may be 0.02% or more, or an upper limit of the content of Nb may be 0.04% or less. Meanwhile, the content of Nb may be 0.010 to 0.050%.

Titanium (Ti): 0.01 to 0.05%

Titanium (Ti) is a nitride forming element which scavenges N by precipitating Ti as TiN. If Ti is not added, there is a possibility in that cracks may occur during continuous casting due to AlN formation. However, when the content of Ti exceeds 0.05%, the strength of martensite may decrease due to additional precipitation of carbides in addition to the removal of dissolved N, and hole expansion ratio and bending workability may be impaired due to the formation of carbides and nitrides such as TiC and TiN. In addition, when the content of Ti is less than 0.01%, it does not contribute to strength increase at all, similar to the Nb element, so a lower limit of the content of Ti in the present disclosure is set to be 0.01% or more. Meanwhile, more preferably, the lower limit of the content of Ti may be 0.02% or more, or an upper limit of the content of Ti may be 0.04% or less. Meanwhile, the content of Ti may be 0.010 to 0.050%.

Antimony (Sb): 0.001 to 0.1%

Antimony (Sb) induces a uniform oxidation reaction in a surface layer zone of the steel sheet and selectively suppresses the formation of C or B oxides in a surface layer portion, thereby improving fatigue properties. From the perspective of obtaining such an effect, a content of Sb is set to be 0.001% or more. Meanwhile, the content of Sb may be preferably 0.002% or more, more preferably 0.005% or more. However, when content of Sb exceeds 0.1%, the castability deteriorates, and Sb segregates at the prior austenite($\gamma$) grain boundary, deteriorating the bendability, so content of Sb is set to be 0.1% or less. Meanwhile, the content of Sb may be 0.001 to 0.100%.

Hereinafter, a steel structure of a steel sheet according to the present disclosure is described.

An average area fraction (C) of cementite precipitates present in at least one grain boundary selected from the group consisting of ferrite and bainite within 10 $\mu$m from a surface of the steel sheet is 60% or less (excluding 0%) compared to an area fraction of cementite precipitates present in the grain boundary of martensite at a point 1/4t from the surface, where t is a total thickness of the steel sheet.

According to the present disclosure, by controlling the composition of the steel sheet and operating conditions, particularly a dew point during annealing, cementite precipitates in the extreme surface layer may be controlled to be lower than that at the point 1/4t, thereby improving the hole expansion ratio. Specifically, when the average area fraction (C) of the cementite precipitate exceeds 60%, too much fine cementite is formed, which accompanies a decrease in fatigue strength, so an upper limit thereof may be set to be 60%, and more preferably, the upper limit may be set to be 50%. Meanwhile, a lower limit of the average area fraction (C) of the cementite precipitates is not particularly limited, but it is preferable that the lower limit of the average area fraction (C) of the cementite precipitates is controlled to be lower within a range possible in terms of equipment configuration, so the lower limit of the average area fraction (C) of the cementite precipitates may exceed 0%, and more preferably, the lower limit of the average area fraction (C) of the cementite precipitates may be 10%.

Meanwhile, in the present disclosure, a total thickness t of the steel sheet may be in the range of 0.5 to 2.5 mm. In this case, the total thickness of the steel sheet may be measured in a direction perpendicular to a rolling direction of the steel sheet.

In addition, the cementite precipitate may be measured based on a standard of having an equivalent diameter of 2 nm or more and 30 nm or less.

According to an embodiment of the present disclosure, the steel sheet may have an area fraction (T1) of at least one selected from the group consisting of ferrite and bainite within 30 $\mu$m from the surface of 15 to 60%. In a surface layer within 30 $\mu$m from the surface described above, the hole expansion ratio required in the present disclosure may not be obtained with a hard martensite structure, and fatigue strength may also be reduced. Therefore, in the present disclosure, the steel sheet may have an area fraction (T1) of at least one selected from the group consisting of ferrite and bainite of 15 to 60%. In this case, although not particularly limited, the remainder may be martensite, except for at least one selected from the group consisting of ferrite and bainite within 30 $\mu$m from the surface.

Specifically, according to an embodiment of the present disclosure, when the area fraction (T1) is less than 15%, fatigue strength and hole expansion ratio may deteriorate, so the area fraction (T1) may be set to be 15% or more. On the other hand, when the area fraction (T1) exceeds 60%, the surface layer of the steel sheet softens, disadvantageous in securing overall strength, and in particular, fatigue properties may deteriorate. Meanwhile, more preferably, a lower limit of the area fraction (T1) may be 18%, or an upper limit of the area fraction (T1) may be 52%.

According to an embodiment of the present disclosure, the steel sheet may have an area fraction (T2) of at least one selected from the group consisting of ferrite and bainite within 10 $\mu$m from the surface of 50 to 80%. That is, in the present disclosure, the area fraction of the content of at least one selected from the group consisting of ferrite and bainite, for each thickness of the surface layer, is optimized.

According to an embodiment of the present disclosure, when the area fraction (T2) is less than 50%, the hole expansion ratio contribution effect may be reduced, and when the area fraction (T2) exceeds 80%, a decrease in strength may occur. Meanwhile, in terms of further improving the above-described effect, a lower limit of the area fraction (T2) may be 55%, or an upper limit of the area fraction (T2) may be 71%.

Meanwhile, the steel sheet of the present disclosure may further include a plating layer. The plating layer is not particularly limited, so not only the type of plating such as zinc-based plating, aluminum-based plating, or the like, but also the method of plating such as hot-dip plating, electroplating, or the like, are not limited. That is, it is sufficient if it can be used in the technical field to which the present disclosure belongs. However, as a preferred example of the present disclosure, the plating layer may be a zinc-based plating layer.

Next, a preferred method for manufacturing a steel sheet according to the present disclosure will be described.

First, a steel slab satisfying the above-described composition is heated to a temperature within a range of 1100 to 1300°C. The present process is performed to smoothly perform a subsequent hot rolling process, and sufficiently obtain the target properties of the steel sheet. In this case, when the reheating temperature is lower than 1100°C, a problem in which a hot rolling load rapidly increases occurs, and when the reheating temperature exceeds 1300°C, an amount of surface scales increases and yield of a material decreases, so it is limited.

The reheated slab is hot rolled to obtain a hot-rolled steel sheet. In this case, hot rolling may be performed at a temperature within a range of Ar3 to 1000°C. A temperature (a finishing rolling temperature) of hot rolling of the reheated slab is set to be Ar3 (a temperature at which ferrite begins to appear when austenite is cooled) or higher, is that, rolling is performed in a dual phase, because, below Ar3, rolling in a dual phase region of ferrite and austenite or ferrite region is performed to create a mixed structure, and there may be concerns about malfunctions due to fluctuations in the hot rolling load.

Next, the hot-rolled steel sheet is coiled at a temperature within a range of 400 to 600°C. When a coiling temperature exceeds 600°C, an oxide film may be excessively generated on a surface of the steel sheet, which may cause defects, and surface properties of a plating material may deteriorate, so an upper limit thereof is limited. In addition, it is preferable to maintain a low coiling temperature to secure material uniformity over an entire length and entire width by forming a single-phase structure rather than a composite structure as much as possible as a structure of a hot-rolled steel sheet. However, as the coiling temperature decreases, the strength of the hot-rolled steel sheet increases, which has the disadvantage of increasing a rolling load of cold rolling, a subsequent process, and there may be a factor that makes actual production impossible, so a lower limit of the coiling temperature is limited to 400°C or higher. Meanwhile, more preferably, the lower limit of the coiling temperature may be 420°C, an upper limit of the coiling temperature may be 500°C, and water cooling treatment cooling may be performed after coiling.

Next, an oxide layer formed on a surface of the coiled hot-rolled steel sheet is removed through a pickling process, and then cold rolling is performed at a reduction ratio of 30 to 80%. If the reduction ratio of the cold rolling is less than 30%, not only is it difficult to secure a target thickness, but there is also a concern that residual hot-rolled grains may affect austenite formation and final properties during annealing heat treatment. In addition, if the reduction ratio of the cold rolling exceeds 80%, there is a problem that material deviation of a final steel sheet may occur due to an uneven amount of reduction rolled in the length and width directions due to work hardening occurring during cold rolling, and it may be difficult to secure the target thickness due to a rolling load.

After cold rolling, the cold-rolled steel sheet is heat treated in an annealing temperature range of Ac3+10°C to Ac3+80°C. In this case, since an Ac3 temperature varies depending on the component, it is determined by the following Equation 1. When the annealing temperature is lower than Ac3+10°C, a mixed grain structure may be formed by dual-phase region annealing rather than single-phase region annealing throughout an entire coil length, which has a detrimental effect on the material, so a lower limit of the annealing temperature is set to be Ac3+10°C. Meanwhile, if the annealing temperature exceeds Ac3+80°C, facility troubles may occur due to overload of an annealing furnace, so an upper limit of the annealing temperature is set to be Ac3+80°C.

$$[Formula\ 1]$$

$$Ac3 = 910 - 203\sqrt{[C]} - 15.2[Ni] + 44.7[Si] + 104[V] + 31.5[Mo] + 13.1[W]$$

In Formula 1 above, [C], [Ni], [Si], [V], [Mo] and [W] represent a weight% content of each element in parentheses.

According to an embodiment of the present disclosure, the heat treatment during the annealing may be performed for 30 seconds or longer in a temperature range of Ac3+10°C to Ac3+80°C. If the heat treatment time at a temperature within a range of Ac3+10°C to Ac3+80°C is less than 30 seconds, fine carbides formed during hot rolling may not be redissolved, which may result in a problem of deterioration in bendability. In addition, since it is not sufficiently transformed into an austenite single phase during annealing and a mixed phase exists, and a martensite phase is not sufficiently formed during final cooling, so there is a possibility that the tensile strength may not reach the standard so that a lower limit thereof is set. Meanwhile, an upper limit of the heat treatment time is not separately limited.

Meanwhile, dew point control in the annealing process described above is important in the present disclosure. In the case of the annealing process, it is largely divided into a preheating zone, a heating zone, and a soaking zone, and at a temperature in the temperature increase and preheating stages of preheating zone and the heating zone, in the range of Ac3+10°C or lower, the dew point temperature is controlled to be -40°C or lower. When the dew point temperature exceeds -40°C at a temperature below Ac3+10°C, Mn and Si-based oxides are eluted to the surface, and although decarburization is actually performed in the soaking zone, soft ferrite is not formed on the surface layer, which does not help increase fatigue strength. Meanwhile, at the temperature of Ac3+10°C or lower, in the temperature increase and preheating stage of the preheating zone and heating zone described above, a lower limit of the dew point temperature does not need to be specifically limited, but may be -60°C, as an example.

However, in the annealing process described above, the lower temperature range is not greatly limited in the present disclosure, and may be lowered within the range permitted by the facility.

Meanwhile, the dew point temperature at a temperature within a range of Ac3+10 to Ac3+80°C, which is a temperature region of the soaking zone, is controlled to be between -30°C and +30°C, to remove the initially formed surface carbides or oxides using a decarburization technology, the carbides or oxides present on the surface layer is removed as much as possible, and the [C] content may be also reduced to secure hole expansion ratio and fatigue properties. In this case when the dew point temperature at a temperature within a range of Ac3+10°C to Ac3+80°C is lower than -30°C, a sufficient decarbonization reaction may not be performed well, and oxides formed in the preheating zone and heating zone may not be effectively removed, so the effect of the present disclosure may not be obtained. On the other hand, if the dew point temperature at a temperature within a range of Ac3+10°C to Ac3+80°C exceeds +30°C, fatigue strength may be significantly reduced due to the excessive decarburization reaction, so the dew point temperature range is set to be +30°C or lower. Meanwhile, according to an embodiment of the present disclosure, more preferably, the lower limit of the dew point temperature at the temperature within the range of Ac3+10°C to Ac3+80°C may be -20°C, or the upper limit of the dew point temperature at the temperature within the range of Ac3+10°C to Ac3+80°C may be +20°C.

According to an embodiment of the present disclosure, during the annealing, a dew point may be controlled to satisfy the following Relational Expression 1.

$$[\text{Relational Expression 1}]$$

$$D2 \leq -0.4 \times D1$$

in Relational Expression 1 above, D1 represents a dew point temperature (°C) at a temperature of Ac3+10°C or lower, which is a temperature increase and preheating stage of a preheating zone and a heating zone, and D2 represents a dew point temperature (°C) at a temperature within a range of Ac3+10°C to Ac3+80°C, which is a temperature region of a soaking zone.

Next, according to an embodiment of the present disclosure, the annealed steel sheet is subjected to primary cooling at an average cooling rate of 10°C/s or less to a temperature within a range of 680 to 750°C, which is a primary cooling end temperature range. When a primary cooling end temperature is lower than 680°C, a bendability (R/t) evaluation value exceeds 3.7, thereby deteriorating formability. On the other hand, if the primary cooling end temperature exceeds 750°C, it cannot be reproduced due to the configuration of facility, and a phenomenon in which a structure is coarsened and strength is deteriorated occurs, so the primary cooling end temperature is limited to a temperature within a range of 680 to 750°C. However, it is more advantageous that the primary cooling end temperature is preferably in the range of 700 to 730°C.

In addition, when an average cooling rate during the primary cooling exceeds 10°C/s, a problem may occur in a plate shape. Meanwhile, a lower limit of the average cooling rate during the primary cooling may not be specifically limited as long as it is within the range, which is possible in the configuration of facility. However, as an example, the lower limit of the average cooling rate during the primary cooling may be 1°C/s.

Next, according to an embodiment of the present disclosure, the primarily-cooled steel sheet is subjected to secondary cooling to a temperature within a range of 100°C to Mf at an average cooling rate of 60 to 160°C/s. Mf refers to a martensite transformation finish temperature (Mf), and since it can be obtained by a method commonly known in the relevant technical field, it is not specifically defined in the present specification, and may be measured using a dilatometer.

According to an embodiment of the present disclosure, in order to secure a level of strength required in the present disclosure, it is advantageous to maintain the above-descried rapid cooling conditions during secondary cooling. When an average cooling rate during the secondary cooling is less than 60°C/s, some bainite structures may be formed during cooling, making it difficult to secure the target strength. On the other hand, when the average cooling rate during the second cooling exceeds 160°C/s, problems of shape deterioration and material deviation in the width direction of the steel sheet may occur due to a rapid martensite transformation rate at a point in time of the secondary cooling. Meanwhile, preferably, a lower limit of the average cooling rate during the secondary cooling may be 70°C/s, or an upper limit of the average cooling rate during the secondary cooling may be 150°C/s.

According to an embodiment of the present disclosure, when a cooling end temperature during the secondary cooling exceeds the Mf temperature, martensite transformation may not sufficiently be performed, making it difficult to secure the microstructure to be obtained by the present disclosure. Meanwhile, when the cooling end temperature during the secondary cooling is lower than 100°C, this is not only disadvantageous in terms of shape due to the too low temperature, but may also exceed the manufacturing process range of the facility, so a lower limit thereof may be set to be 100°C. Meanwhile, the lower limit of the cooling end temperature during the secondary cooling may be more preferably 90°C, and even more preferably 80°C. Similarly, an upper limit of the cooling end temperature during the secondary cooling may be more preferably 140°C, and even more preferably 120°C.

Next, according to an embodiment of the present disclosure, the secondarily- cooled steel sheet may be reheated and be subjected to an over-aging heat treatment at a temperature within a range of 150 to 240°C. By transforming the martensite obtained through a rapid cooling process by the secondary cooling described above into tempered martensite through the reheating and over-aging heat treatment, a yield strength may be increased.

When the over-temperature heat treatment temperature is lower than 150°C, tempering may not be sufficiently achieved, so not only may the yield strength be low, but sufficient toughness may not be secured. On the other hand, when the over-aging heat treatment temperature exceeds 240°C, the bending workability may deteriorate due to the precipitation a large amount of carbides and coarsening of carbides.

Meanwhile, the lower a lower limit of the reheating and over-aging heat treatment temperature, the more advantageous the bendability, but considering the facility characteristics, the lower limit thereof may be set to be 150°C or higher. However, the lower limit of the reheating and over-aging heat treatment temperature may be more preferably 160°C, and may be even more preferably 170°C. Likewise, an upper limit of the reheating and over-aging heat treatment temperature may be more preferably 200°C, and may be even more preferably 180°C.

Meanwhile, the over-aging heat treatment time may be 200 seconds or longer. When the over-aging heat treatment time is less than 200 seconds, tempering may not be sufficiently performed, which may result in a problem of lowering the yield strength.

However, according to an embodiment of the present disclosure, the lower limit of the over-aging heat treatment time may be 300 seconds, and more preferably 400 seconds.

Meanwhile, in the present disclosure, the upper limit of the over-aging heat treatment time is not particularly limited, but since it is difficult to exceed 1000 seconds due to the characteristics of continuous annealing facility, the upper limit of the over-aging heat treatment time may be 1000 seconds or less.

However, according to an embodiment of the present disclosure, the upper limit of the over-aging heat treatment time may be 900 seconds, or may be 800 seconds.

Next, if necessary, temper rolling or tension leveling may be performed to improve the plate shape.

In addition, if necessary, the method may further include forming a plating layer on the surface of the steel sheet. The plating may be performed by a hot-dip galvanizing method in which a plating bath is installed and the steel sheet is dipped in a hot-dip plating solution, or by an electroplating method in an electrolyte after annealing is completed. The plating conditions are not particularly limited as long as they are generally known in the technical field to which the present disclosure belongs.

According to the manufacturing method described above, a steel sheet having excellent fatigue properties no cracks occurring under a maximum of $10^7$ repeated tests at a frequency of 20 Hz may be effectively obtained, with a tensile strength of 1500 MPa or higher, and a hole expansion capacity (HER) of 50% or higher.

Mode for Invention

Hereinafter, the present disclosure will be specifically described through the following Examples. However, it should be noted that the following examples are only for describing the present disclosure by illustration, and not intended to limit the right scope of the present disclosure. The reason is that the right scope of the present disclosure is determined by the matters described in the claims and reasonably inferred therefrom.

(Example)

Molten steel having the alloy composition described in Table 1 below was cast into an ingot, and then sized and rolled to prepare a steel slab. The steel slab was heated to a temperature of 1200°C, maintained for 1 hour, then was subjected to finishing hot rolling at a temperature of 900°C, charged into a heated furnace, with various conditions set, maintained for 1 hour, and then cooled by furnace cooling to simulate hot-rolled coiling. After pickling the hot-rolled steel sheet, cold rolling was performed at a cold rolling reduction rate of 50%, and then was subjected to an annealing heat treatment, primary cooling (slow cooling), secondary cooling (rapid cooling), and over-aging heat treatment under the conditions described in Table 2 below to form a cold-rolled steel sheet and electrogalvanizing was performed under normal conditions.

A tensile test was performed by cutting a JIS No. 5 tensile test sample so that a direction perpendicular to a rolling direction on a surface of the steel sheet at a position of 1/4 of a width of the steel sheet was a longitudinal direction, and a tensile test (JIS Z2241) was performed. Through the tensile test, a yield strength (YS), a tensile strength (TS), and elongation (El) were obtained.

A bending test was performed by cutting a single test sample having a length of 100 mm in a direction perpendicular to a rolling direction and a length of 35 mm in the rolling direction on the surface of the steel sheet, at a position of 1/4 of the width of the steel sheet, perpendicular to the rolling direction on the surface of the steel sheet, and using a jig with an inner angle of a tip of 90 degrees. By changing a radius of curvature of the inner angle of the tip of the jig, the minimum inner angle of the tip of the jig at which no cracks are observed on the surface of the test sample was obtained, and a limit bending radius (R/t) was calculated by dividing the obtained radius (R) by a plate thickness (t). The smaller this value, the better the bendability. The crack was determined using a stereoscopic microscope, magnified up to 20 times, and a length of the crack was measured. Since it is difficult to distinguish microscopic cracks less than 0.1 mm from surface irregularities using a stereoscopic microscope, cracks greater than 0.1 mm were judged as failures.

A Hole Expansion ratio(HER) was evaluated by punching a hole at a center of the plate and determining a point at which a crack occurs during forming, as a ratio of an inner diameter at which a crack occurs to an initial inner diameter.

Fatigue strength was evaluated by an one-way tensile fatigue test. A condition in which no cracks occurred at a maximum of $10^7$ repetitions at a frequency of 20 Hz in a longitudinal direction, perpendicular to a rolling direction on the steel plate surface was determined to be excellent.

The steel sheet of the Inventive Example has a tensile strength of 1500 MPa or more, a hole expansion ratio (HER) of 50% or more, and no cracks occur under a maximum of $10^7$ repetitions at a frequency of 20 Hz, so that the steel sheet of the Inventive Example has excellent fatigue properties, and the steel sheet of Comparative Example does not satisfy at least one of the conditions described above.

Table 1 below shows the range of components used to manufacture Inventive Steel and Comparative Steel, and Table 2 summarizes each operating conditions of Inventive Steel and Comparative Steel. Table 3 shows that the operating conditions which are outside the scope of the present disclosure in Inventive Steel and Comparative Steel, marked with *, and the operating conditions which are outside the target properties are also marked with *.

[Table 1]

|  | C | Si | Mn | B | P | S | N | S.Al | Cr | Mo | Nb | Ti | Sb |
|---|---|---|---|---|---|---|---|---|---|---|---|---|---|
| Inventive Steel 1 | 0.23 | 0.1 | 1.8 | 0.00 2 | 0.00 6 | 0.00 2 | 0.00 3 | 0.035 | - | 0.015 | 0.032 | - | - |
| Inventive Steel 2 | 0.22 | 0.2 | 1.7 | 0.00 2 | 0.00 5 | 0.00 1 | 0.00 4 | 0.032 | - | 0.013 | 0.026 | - | - |
| Inventive Steel 3 | 0.18 | 0.15 | 1.9 | 0.00 1 | 0.00 7 | 0.00 1 | 0.00 3 | 0.035 | - | - | 0.030 | - | - |
| Inventive Steel 4 | 0.28 | 0.1 | 2.1 | 0.00 2 | 0.00 6 | 0.00 1 | 0.00 3 | 0.036 | - | - | 0.034 | 0.032 | - |
| Inventive Steel 5 | 0.19 | 0.12 | 2.0 | 0.00 2 | 0.00 4 | 0.00 1 | 0.00 4 | 0.032 | - | - | 0.033 | - | 0.0 2 |
| Inventive Steel 6 | 0.23 | 0.11 | 2.6 | 0.00 2 | 0.00 8 | 0.00 1 | 0.00 5 | 0.033 | 0.01 2 | - | 0.062 | - | - |
| Inventive Steel 7 | 0.23 | 0.23 | 2.3 | 0.00 1 | 0.00 5 | 0.00 1 | 0.00 4 | 0.031 | 0.08 2 | - | - | - | - |
| Inventive Steel 8 | 0.25 | 0.32 | 1.4 | 0.00 2 | 0.00 2 | 0.00 1 | 0.00 4 | 0.004 2 | - | - | 0.023 | - | 0.0 2 |
| Comparati ve Steel 1 | 0.22 | 0.02 | 0.8 | - | 0.00 7 | 0.00 1 | 0.00 3 | 0.004 1 | - | - | 0.03 | - | - |
| Comparati ve Steel 2 | 0.23 | 0.03 | 0.7 | 0.00 2 | 0.00 8 | 0.00 2 | 0.00 4 | 0.003 2 | - | - | - | - | - |
| Comparati ve Steel 3 | 0.21 | 0.04 | 0.9 | 0.00 1 | 0.00 7 | 0.00 2 | 0.00 3 | 0.003 8 | - | - | - | 0.03 | - |

[Table 2]

| Division | Steel type No. | Coiling temperature (°C) | Annealing temperature (°C) | Average dew point temperature(°C) | | Primary cooling | | Secondary cooling | | Over-aging heat treatment | |
|---|---|---|---|---|---|---|---|---|---|---|---|
| | | | | Preheating zone/ Heating zone ① | Soaking zone ② | End temperature (°C) | Average cooling rate (°C/s) | End temperature (°C) | Average cooling rate (°C/s) | Temperature (°C) | Time (sec.) |
| Inventive Example 1 | Inventive Steel 1 | 452 | 853 | -45 | 10 | 710 | 6.2 | 110 | 82 | 182 | 451 |
| Inventive Example 2 | Inventive Steel 2 | 530 | 852 | -43 | 15 | 712 | 5.5 | 112 | 85 | 173 | 460 |
| Inventive Example 3 | Inventive Steel 3 | 455 | 849 | -45 | 10 | 710 | 6.1 | 110 | 81 | 181 | 459 |
| Inventive Example 4 | Inventive Steel 4 | 560 | 851 | -42 | 13 | 713 | 5.8 | 113 | 103 | 182 | 473 |
| Inventive Example 5 | Inventive Steel 4 | 550 | 849 | -45 | -25 | 725 | 5.5 | 103 | 115 | 180 | 465 |
| Inventive Example 6 | Inventive Steel 5 | 525 | 846 | -41 | -16 | 721 | 5.6 | 101 | 108 | 180 | 460 |
| Inventive Example 7 | Inventive Steel 6 | 550 | 842 | -42 | 25 | 721 | 5.6 | 104 | 110 | 175 | 465 |
| Inventive Example 8 | Inventive Steel 7 | 560 | 839 | -42 | 18 | 718 | 5.5 | 110 | 98 | 180 | 463 |
| Comparative Example 1 | Inventive Steel 5 | 550 | 845 | -44 | -35 * | 715 | 5.4 | 103 | 92 | 181 | 455 |
| Comparative Example 2 | Inventive Steel 6 | 550 | 846 | -41 | 34 * | 720 | 5.9 | 104 | 94 | 170 | 460 |
| Comparative Example 3 | Inventive Steel 4 | 453 | 855 | -20 * | 25 | 713 | 5.8 | 108 | 107 | 192 | 463 |
| Inventive Example 9 | Inventive Steel 4 | 570 | 861 | -45 | 15 | 705 | 6.2 | 108 | 82 | 173 | 452 |
| Inventive Example 10 | Inventive Steel 5 | 610 | 861 | -43 | 11 | 710 | 5.6 | 105 | 95 | 182 | 452 |
| Comparative Example 4 | Inventive Steel 5 | 450 | 862 | -46 | -10 | 711 | 6.2 | 280 * | 45 * | 350 | 412 |

(continued)

| Division | Steel type No. | Coiling temperature (°C) | Annealing temperature (°C) | Average dew point temperature(°C) | | Primary cooling | | Secondary cooling | | Over-aging heat treatment | |
|---|---|---|---|---|---|---|---|---|---|---|---|
| | | | | Preheating zone/ Heating zone ① | Soaking zone ② | End temperature (°C) | Average cooling rate (°C/s) | End temperature (°C) | Average cooling rate (°C/s) | Temperature (°C) | Time (sec.) |
| Inventive Example 11 | Inventive Steel 5 | 452 | 845 | -42 | 15 | 705 | 5.6 | 115 | 78 | 182 | 451 |
| Comparative Example 5 | Inventive Steel 6 | 712* | 845 | -45 | -25 | 650 * | 6.3 | 180 | 82 | 210 | 451 |
| Inventive Example 12 | Inventive Steel 7 | 462 | 853 | -42 | 8 | 703 | 5.6 | 110 | 78 | 175 | 450 |
| Comparative Example 6 | Inventive Steel 8 | 480 | 841 | -30 * | 10 | 620 * | 5.6 | 102 | 82 | 178 | 453 |
| Comparative Example 7 | Comparative Steel 1 | 452 | 812 | -42 | -10 | 650 * | 3.5 | 380 * | 75 | 420 * | 480 |
| Comparative Example 8 | Comparative Steel 1 | 452 | 832 | -45 | 8 | 650 * | 4.3 | 360 * | 75 | 420 * | 480 |
| Comparative Example 9 | Comparative Steel 2 | 480 | 824 | -35 * | -35 * | 700 | 4.3 | 110 | 82 | 180 | 450 |
| Comparative Example 10 | Comparative Steel 3 | 480 | 815 | -43 | 10 | 710 | 5.3 | 105 | 85 | 182 | 450 |

[Table 3]

| Division | YS (MPa) | TS (MPa) | El (%) | F/B phase fraction ① (%) | F/B phase fraction ② (%) | Ratio of precipitates ③ (%) | Fatigue strength ④ | HER (%) | Bendability R/t |
|---|---|---|---|---|---|---|---|---|---|
| Inventive Example 1 | 1230 | 1518 | 8.2 | 22 | 62 | 35 | ○ | 55 | 3.5 |
| Inventive Example 2 | 1235 | 1530 | 7.8 | 18 | 65 | 42 | ○ | 55 | 3.5 |
| Inventive Example 3 | 1185 | 1562 | 7.5 | 35 | 58 | 46 | ○ | 56 | 3.5 |
| Inventive Example 4 | 1320 | 1632 | 8.3 | 52 | 71 | 18 | ○ | 57 | 3.5 |
| Inventive Example 5 | 1227 | 1536 | 8.1 | 21 | 65 | 21 | ○ | 52 | 2.8 |
| Inventive Example 6 | 1227 | 1539 | 8.2 | 20 | 62 | 22 | ○ | 51 | 2.9 |

(continued)

| Division | YS (MPa) | TS (MPa) | El (%) | F/B phase fraction ① (%) | F/B phase fraction ② (%) | Ratio of precipitates ③ (%) | Fatigue strength ④ | HER (%) | Bendability R/t |
|---|---|---|---|---|---|---|---|---|---|
| Inventive Example 7 | 1198 | 1555 | 7.9 | 31 | 62 | 19 | ○ | 52 | 3.1 |
| Inventive Example 8 | 1285 | 1641 | 8.1 | 45 | 59 | 35 | ○ | 53 | 2.4 |
| Comparative Example 1 | 1198 | 1555 | 7.9 | 3 * | 12 * | 20 | ○ | 35 * | 5.2 |
| Comparative Example 2 | 1285 | 1641 | 8.1 | 82 * | 91 * | 31 | × | 62 | 2.2 |
| Comparative Example 3 | 1280 | 1595 | 8.1 | 45 | 62 | 78 * | × | 37 * | 4.3 |
| Inventive Example 9 | 1185 | 1532 | 7.9 | 22 | 55 | 45 | ○ | 55 | 3.5 |
| Inventive Example 10 | 1165 | 1526 | 8.4 | 25 | 61 | 35 | ○ | 56 | 3.5 |
| Comparative Example 4 | 1186 | 1528 | 8.5 | 5 * | 15 * | 85 * | × | 45 * | 4.3 |
| Inventive Example 11 | 1201 | 1535 | 8.2 | 22 | 70 | 53 | ○ | 62 | 4.6 |
| Comparative Example 5 | 1185 | 1485 * | 7.9 | 8 * | 33 * | 72 * | × | 35 * | 4.6 |
| Inventive Example 12 | 1232 | 1586 | 7.6 | 21 | 56 | 48 | ○ | 55 | 3.5 |
| Comparative Example 6 | 1186 | 1506 | 7.4 | 6 * | 28 * | 69 * | × | 28 * | 3.8 |
| Comparative Example 7 | 985 | 1278 * | 10.2 | 17 | 57 | 72 * | ○ | 25 * | 4.3 |
| Comparative Example 8 | 965 | 1312 * | 10.3 | 5 * | 12 * | 82 * | ○ | 41 * | 3.9 |
| Comparative Example 9 | 1023 | 1265 * | 10.5 | 6 * | 13 * | 85 * | × | 42 * | 3.9 |
| Comparative Example 10 | 896 | 1183 * | 10.1 | 5 * | 10 * | 84 * | ○ | 36 * | 3.7 |

Meanwhile, in Table 2 above, ① to ④ represent the following values.

①: Average area fraction (%) of at least one selected from the group consisting of ferrite and bainite within 30 $\mu$m from the surface

②: Average area fraction (%) of at least one selected from the group consisting of ferrite and bainite within 10 $\mu$m from the surface

③: Area fraction (%) of cementite precipitates present in grain boundaries of at least one selected from the group consisting of ferrite and bainite within 10 $\mu$m from the surface compared to the area of cementite precipitates present in grain boundaries of martensite at a point 1/4t from the surface, where t is a total thickness of the steel sheet = [(Area of cementite at (F+B) grain boundary within 10 μm from the surface) / (Area of cementite at martensite grain boundary at a point 1/4t from the surface) × 100]

④: it expresses fatigues properties in which no cracks occur under a maximum of $10^7$ repeated tests at a frequency of 20 Hz, and is marked as excellent (○) and poor (×).

In this case, to measure 'an average area fraction (%) of at least one selected from the group consisting of ferrite and bainite within 30 μm from the surface' of ① above, a cross-section thereof parallel to a rolling direction was mechanically polished and nital etched, and ferrite and bainite in a region from the surface of the steel sheet to 30 μm thereof were observed in four fields of view (i.e., measured at four points in a thickness direction in a region of 30 μm from the surface) using a scanning electron microscope (SEM) in the region of 30 μm from the surface of the steel sheet. That is, an area fraction of each structure was obtained by image analysis of the SEM image at a magnification of 2000x, and an average area fraction was obtained by calculating an arithmetic mean of the area fraction obtained from each of the four fields of view.

In addition, to measure an 'average area fraction (%) of at least one selected from the group consisting of ferrite and bainite within 10 μm from the surface' of ② above, the area fraction was analyzed using an image analyzer through SEM observation after polishing and etching the surface layer.

In addition, when measuring an 'average area fraction (%) of cementite precipitates present in grain boundaries of at least one selected from the group consisting of ferrite and bainite within 10 μm from the surface compared to an area of cementite precipitates present in grain boundaries of martensite at a point 1/4t from the surface, where t is a total thickness of the steel sheet,' of ③ above, in order to analyze a presence ratio of cementite precipitates with an equivalent circle diameter of 30 nm or less present in the grain boundaries at each location, a size of cementite present in the grain boundary was measured using the SEM image at a magnification of 2000x, and the presence ratio of cementite in the grain boundaries with an equivalent diameter of 2 to 30 nm was targeted through the SEM image at a magnification of 2000x, and 10 fields of view were analyzed and an arithmetic mean thereof was used to determine a representative value.

As can be seen from Table 1, in Inventive Examples of the present disclosure, it was confirmed that a tensile strength is 1500 MPa or more, a hole expansion ratio (HER) is 50% or more, and no cracks occur under a maximum of $10^7$ repeated tests at a frequency of 20 Hz, so that fatigue properties are excellent.

On the other hand, in Comparative Examples of the present disclosure, it was confirmed that at least one property of the strength, the hole expansion ratio, and the fatigue properties described above are inferior since the conditions required in the present disclosure were not satisfied.

That is, by controlling the components and operating conditions required in the present disclosure, it is possible to manufacture a 1500 MPa grade annealed and electrogalvanized steel sheet having excellent hole expansion ratio, and fatigue properties as in the case of Inventive Example.

**Claims**

1. A steel sheet including by weight%:

   0.1 to 0.3% of carbon (C), 0.5% or less (excluding 0%) of silicon (Si), 1.0 to 3.0% of manganese (Mn), 0.0005 to 0.003% of boron (B), 0.01% or less (excluding 0%) of phosphorus (P), 0.01% or less (excluding 0%) of sulfur (S), 0.01% or less (excluding 0%) of nitrogen (N), 0.01 to 0.1% of aluminum (Al), with a remainder of Fe and other inevitable impurities,
   wherein an average area fraction of cementite precipitates present in at least one grain boundary selected from the group consisting of ferrite and bainite within 10 μm from a surface thereof is 60% or less (excluding 0%), compared to an area of cementite precipitates present in the grain boundary of martensite at a point 1/4t from the surface, where t is a total thickness of the steel sheet.

2. The steel sheet of claim 1, further comprising by weight%: at least one selected from the group consisting of 0.2% or less (excluding 0%) of chromium (Cr), 0.01 to 0.1% of molybdenum (Mo), 0.01 to 0.05% of niobium (Nb), 0.01 to 0.05% of titanium (Ti), and 0.001 to 0.1% of antimony (Sb).

3. The steel sheet of claim 1, wherein an average area fraction of at least one selected from the group consisting of ferrite and bainite within 30 μm from the surface is 15 to 60%.

4. The steel sheet of claim 1, wherein an average area fraction of at least one selected from the group consisting of ferrite and bainite within 10 μm from the surface is 50 to 80%.

5. The steel sheet of claim 1, further comprising:
   a zinc-based plating layer on the surface of the steel sheet.

6. A method for manufacturing a steel sheet comprising:

   reheating a steel slab including by weight%, 0.1 to 0.3% of carbon (C), 0.5% or less (excluding 0%) of silicon (Si), 1.0 to 3.0% of manganese (Mn), 0.0005 to 0.003% of boron (B), 0.01% or less (excluding 0%) of phosphorus (P), 0.01% or less (excluding 0%) of sulfur (S), 0.01% or less (excluding 0%) of nitrogen (N), 0.01 to 0.1% of aluminum (Al), with a remainder of Fe and other inevitable impurities, at a temperature within a range of 1100 to 1300°C;
   hot rolling the reheated slab to manufacture a hot-rolled steel sheet;
   coiling the hot-rolled steel sheet at a temperature within a range of 400 to 600°C;
   cold rolling the coiled hot-rolled steel sheet at a reduction ratio of 30 to 80%;
   annealing the cold-rolled steel sheet by heat treatment at a temperature within a range of Ac3+10°C to Ac3+80°C, wherein in the annealing operation, a dew point temperature is controlled to be -40°C or lower at a temperature of Ac3+10°C or lower, and a dew point temperature is controlled to be from -30°C to +30°C at a temperature within a range of Ac3+10°C to Ac3+80°C.

7. The method for manufacturing a steel sheet of claim 6, wherein in the annealing operation, a heat treatment is performed at a temperature within a range of Ac3+10°C to Ac3+80°C for 30 seconds or longer.

8. The method for manufacturing a steel sheet of claim 6, further comprising:
   primarily cooling the annealed steel sheet to a temperature within a range of 680 to 750°C, which is a primary cooling end temperature range, at an average cooling rate of 10°C/s or less.

9. The method for manufacturing a steel sheet of claim 8, further comprising:
   secondarily cooling the primarily-cooled steel sheet to a temperature within a range of 100°C to Mf at an average cooling rate of 60 to 160°C/s.

10. The method for manufacturing a steel sheet of claim 9, further comprising:
    reheating and over-aging the secondarily-cooled steel sheet by heat treatment to a temperature within a range of 150 to 240°C.

11. The method for manufacturing a steel sheet of claim 10, wherein the over-aging heat treatment operation is performed for 200 to 1000 seconds.

12. The method for manufacturing a steel sheet of claim 6, wherein the steel slab further includes by weight%: at least one selected from the group consisting of 0.2% or less (excluding 0%) of chromium (Cr), 0.01 to 0.1% of molybdenum (Mo), 0.01 to 0.05% of niobium (Nb), 0.01 to 0.05% of titanium (Ti), and 0.001 to 0.1% of antimony (Sb).

# INTERNATIONAL SEARCH REPORT

International application No.

**PCT/KR2023/019353**

## A. CLASSIFICATION OF SUBJECT MATTER

**C22C 38/04**(2006.01)i; **C22C 38/02**(2006.01)i; **C22C 38/00**(2006.01)i; **C22C 38/06**(2006.01)i; **C22C 38/38**(2006.01)i; **C22C 38/22**(2006.01)i; **C22C 38/26**(2006.01)i; **C22C 38/28**(2006.01)i; **C21D 8/02**(2006.01)i; **B21C 47/02**(2006.01)i

According to International Patent Classification (IPC) or to both national classification and IPC

## B. FIELDS SEARCHED

Minimum documentation searched (classification system followed by classification symbols)

C22C 38/04(2006.01); C21D 8/02(2006.01); C21D 9/46(2006.01); C22C 38/00(2006.01); C22C 38/02(2006.01); C22C 38/14(2006.01); C22C 38/38(2006.01); C23C 2/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 과시효(overaging), 노점(dew point), 소둔(annealing), 냉각(cooling), 냉연강판 (cold rolled steel sheet), 재가열(reheating), 마르텐사이트 변태 종료온도(Mf)

## C. DOCUMENTS CONSIDERED TO BE RELEVANT

| Category* | Citation of document, with indication, where appropriate, of the relevant passages | Relevant to claim No. |
|---|---|---|
| Y | KR 10-1758485 B1 (POSCO) 17 July 2017 (2017-07-17)<br>See claims 1, 5-6 and 8. | 1-12 |
| Y | JP 5810499 B2 (JFE STEEL CORP.) 11 November 2015 (2015-11-11)<br>See claims 1-2 and table 2. | 1-12 |
| Y | JP 04-289120 A (NKK CORP.) 14 October 1992 (1992-10-14)<br>See paragraph [0017] and claim 1. | 10-11 |
| A | KR 10-2022-0041506 A (HYUNDAI STEEL COMPANY) 01 April 2022 (2022-04-01)<br>See paragraphs [0067]-[0071] and claims 1 and 5-10. | 1-12 |
| A | KR 10-2020407 B1 (POSCO) 10 September 2019 (2019-09-10)<br>See claims 1 and 8. | 1-12 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 February 2024** | **28 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2023/019353** |

### C. DOCUMENTS CONSIDERED TO BE RELEVANT

| Category* | Citation of document, with indication, where appropriate, of the relevant passages | Relevant to claim No. |
|---|---|---|
| A | JP 2011-153368 A (SUMITOMO METAL IND., LTD.) 11 August 2011 (2011-08-11)<br>    See paragraphs [0045]-[0050]. | 1-12 |

Form PCT/ISA/210 (second sheet) (July 2022)

**INTERNATIONAL SEARCH REPORT**
**Information on patent family members**

International application No.

**PCT/KR2023/019353**

| Patent document cited in search report | | | Publication date (day/month/year) | Patent family member(s) | | | Publication date (day/month/year) |
|---|---|---|---|---|---|---|---|
| KR | 10-1758485 | B1 | 17 July 2017 | CN | 108431273 | A | 21 August 2018 |
| | | | | CN | 108431273 | B | 12 June 2020 |
| | | | | EP | 3392363 | A1 | 24 October 2018 |
| | | | | EP | 3392363 | B1 | 25 March 2020 |
| | | | | JP | 2019-504196 | A | 14 February 2019 |
| | | | | JP | 6763023 | B2 | 30 September 2020 |
| | | | | MX | 2018007347 | A | 24 August 2018 |
| | | | | US | 10900097 | B2 | 26 January 2021 |
| | | | | US | 2018-0371570 | A1 | 27 December 2018 |
| | | | | WO | 2017-105064 | A1 | 22 June 2017 |
| JP | 5810499 | B2 | 11 November 2015 | JP | 2012-072453 | A | 12 April 2012 |
| JP | 04-289120 | A | 14 October 1992 | JP | 2528387 | B2 | 28 August 1996 |
| KR | 10-2022-0041506 | A | 01 April 2022 | KR | 10-2496311 | B1 | 07 February 2023 |
| KR | 10-2020407 | B1 | 10 September 2019 | KR | 10-2019-0075589 | A | 01 July 2019 |
| JP | 2011-153368 | A | 11 August 2011 | JP | 5636683 | B2 | 10 December 2014 |

Form PCT/ISA/210 (patent family annex) (July 2022)

**EP 4 628 614 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009 A
- JP 062894 A
- JP 2013048343 A
- JP 2009062894 A